Europäisches Patentamt

(19) European Patent Office

Office européen des brevets

(11) Publication number: **0 208 181**

**A1**

# (12) EUROPEAN PATENT APPLICATION

(21) Application number: 86108412.7

(22) Date of filing: 20.06.86

(51) Int. Cl.⁴: **G 06 F 9/38**
**G 06 F 9/46**

(30) Priority: 28.06.85 US 750352

(43) Date of publication of application:
14.01.87 Bulletin 87/3

(84) Designated Contracting States:
CH DE FR GB IT LI NL SE

(71) Applicant: Hewlett-Packard Company
P.O. Box 10301
Palo Alto California 94303-0890(US)

(72) Inventor: Kao, Russell
217 Asa Avenue No. 47
Mountain View, CA 94040(US)

(72) Inventor: Miller, Terrence C.
169 Oak Court
Menlo Park, CA 94025(US)

(72) Inventor: Bryg, William R.
18630 Perego Way
Saratoga, CA 95070(US)

(74) Representative: Patentanwälte Kohler - Schwindling -
Späth
Hohentwielstrasse 41
D-7000 Stuttgart 1(DE)

(54) Programme counter queue for a pipelined processor.

(57) A pipeline processor having a program counter (61) in which are entered addresses of instructions to be executed and having a program counter queue (610) which stores the most recent addresses in the program counter prior to that currently in the program counter. In response to setting a Q bit false, the contents of the program counter queue (610) are frozen. In response to a trap or an interrupt, the Q bit is set false and a trap or interrupt handler routine is activated. At the end of the trap or interrupt handler routine, the Q bit is set true and as addresses are pushed out of the queue, they are inserted into the first level of the pipeline.

EP 0 208 181 A1

./...

FIG 6

This invention is related in general to pipelined computer systems and more particularly to the design of a program counter queue that enables efficient operation in an environment in which program branches, interrupts and traps occur. Typically, the execution of an instruction involves several steps, including, for example, loading the address of the instruction into a program counter (PC), fetching the instruction, decoding the instruction and implementing the action specified by the instruction. This sequence of steps can require several instruction cycles. Therefore, it has been found to be efficient to utilize a pipelined architecture to divide the execution of an instruction into several levels of action. For example, in one type of pipeline, the following levels can be utilized: in level 1, an instruction address is loaded into the program counter; in level 2, an instruction is fetched; in level 3, an instruction is decoded; and in level 4, the action designated by the instruction is implemented.

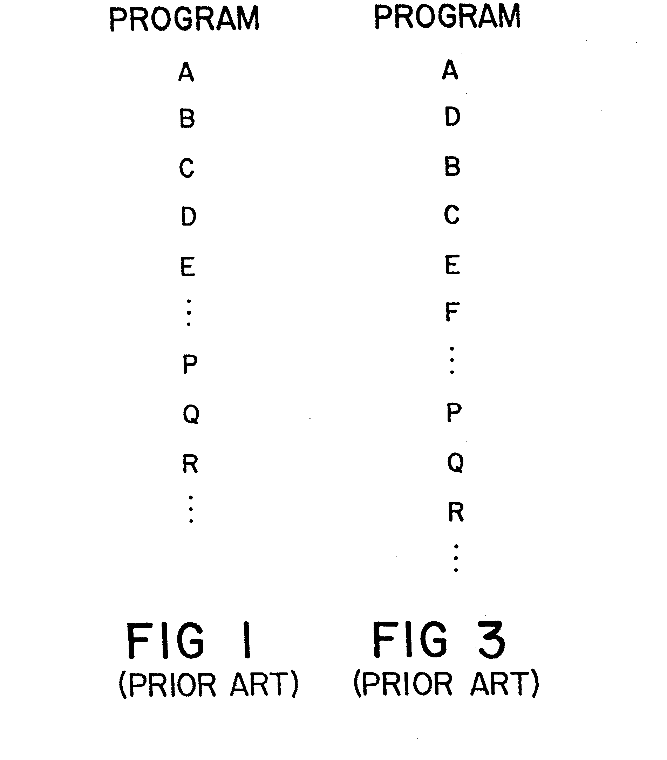

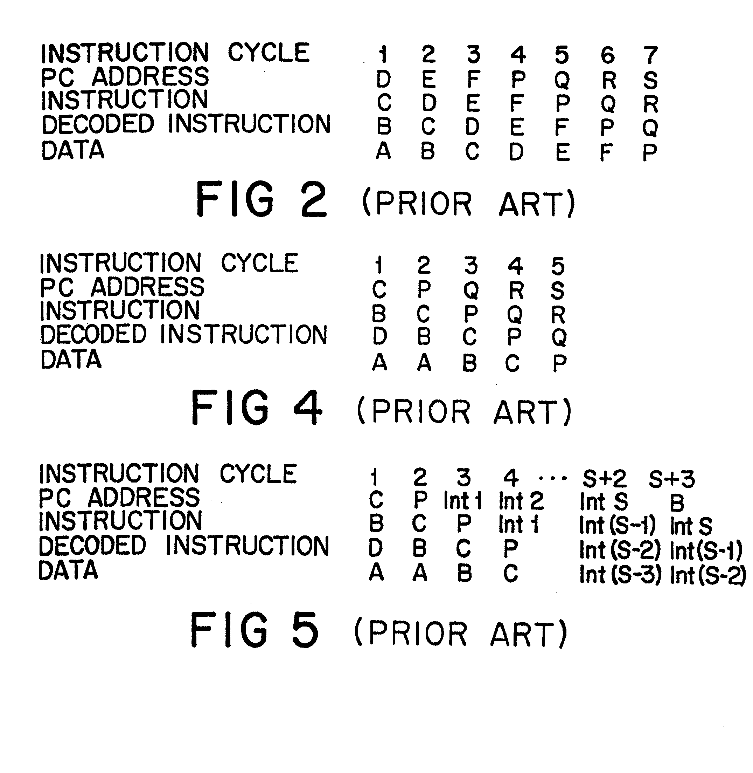

A branch in a program can lead to inefficiencies in a pipelined computer. These inefficiencies can be seen by following the execution of several steps of the execution of the program shown in Figure 1. In Figure 2, the status of the program instructions is presented for a set of sequential computer instruction cycles. In the column

1

indicated by cycle 1, the address of instruction D has been loaded into the program counter (PC), instruction C has been fetched from memory and loaded into the instruction register (I), instruction B has been decoded and instruction A has been fully executed to produce data. In the next instruction cycle (cycle 2), instruction B is executed, instruction C is decoded, instruction D is fetched into the instruction register, and the address of instruction E is entered into the program counter.

Unfortunately, when a branch occurs, this may require the disposal of partially executed instructions. For example, if instruction D indicates that the program is to branch to instruction P, then partially executed instructions E, F and G need to be discarded and any effects on the computer that result from their partial execution (for example, the value of a counter that keeps track of the number of instruction addresses that have been loaded into the program counter) have to be undone. Methods to accomplish this are well known, but such methods still involve disposing partially executed instructions.

Since approximately 10-25% of all instructions are branch instructions, such disposal significantly impacts the speed of execution of programs. Therefore, a type of branch called a delayed branch has been developed to avoid such disposal. When a delayed branch is compiled, it is inserted enough steps earlier in the compiled program that it will produce the branch at the desired point in the program. In a pipeline having N levels, this requires that the compiled branch be inserted N-2 steps early in the compiled program. In Figure 3 is shown the compiled program when a delayed branch instruction D is utilized. For the four level pipeline discussed previously, this requires that instruction D be 2 steps earlier than it would otherwise be. The execution of this program is shown in Figure 4. As indicated in that Figure, the use of the delayed branch enables the elimination of the steps of loading instructions E and F into the pipeline only to later discard them.

However, delayed branches create a new problem when an interrupt or a trap occurs soon after the delayed branch instruction is fully executed. This problem is illustrated in Figure 5 for the case in which an interrupt occurs before execution of the first instruction following the branch (i.e., between the trigger edges of instruction cycles 2 and 3). Thus, starting in cycle 3, the addresses of the interrupt handler instructions are inserted. Figure 5 illustrates the situation for an interrupt handler routine having S instructions.

When the interrupt occurs, normal execution of instructions already in the pipeline also needs to be interrupted. For example, if instruction B were a branch instruction, then in cycle 3 when it is fully executed it would try to insert the address of its branch target (i.e., the address of the instruction to which the program is to branch) into the program counter. However, the first interrupt

3

instruction address needs to be inserted into the program counter. Therefore, to avoid such conflicts, execution of steps B, C and P is inhibited. However, when the interrupt routine is completed, steps B, C and P need to be reinserted into the pipeline. In order to avoid the expense of additional special hardware to temporarily hold the decoded instruction B, instruction C and the address of instruction P, the addresses of these instructions are sequentially inserted into the top of the pipeline (i.e., into the program counter) immediately following the last instruction of the interrupt handler.

If delayed branches were not used, then only the address of the instruction that has been decoded (i.e., instruction B) would need to be saved in order to restart entry of the program after the interrupt routine. However, if this were done, then from the program in Figure 3, the addresses of instructions B, C, E, F,... would be sequentially inserted. This approach would not save enough information to know that a branch to step P is to occur after step C. Thus, the addresses of instructions P, C and B need to be saved in response to the interrupt. In order to have these addresses available, a program counter queue is connected to the program counter. In each cycle, not only is the address in the program counter used to fetch the next instruction, but in addition that instruction address is copied into the program counter queue. Thus, the addresses of instructions B, C and P are loaded into the program counter queue. In general, the program counter queue needs to store N-1 addresses for a pipeline having N levels. The need for these addresses stored in the program counter queue will occur if an interrupt occurs when the pipeline includes partially executed instructions corresponding to nonsequential addresses in the program. In a computer having N levels, this will occur when the interrupt occurs within N-2 cycles after execution of a delayed branch. The same problem as for interrupts occurs when normal execution of the program is interrupted by a trap.

In the MIPS computer developed at the University of California at Berkeley, delayed branches and the program counter queue were introduced. When an interrupt occurs, the addresses in the program counter queue are copied into memory and then at the end of the interrupt routine are a sequence of delayed branches that sequentially insert into the pipeline the addresses of the memory locations in which the addresses from the program counter queue are located.

In accordance with the illustrated preferred embodiment, hardware is included that avoids the need to save the program queue addresses in memory. The status register includes a Q bit that is utilized as a clock enable to the program counter queue. When an interrupt occurs, the Q bit is set false so that the contents of the program counter queue at the time of the interrupt are saved in the queue itself. At the input of the program counter is a multiplexer that selects between four sources of input. The

5

first source is the prior address in the program counter incremented by an amount sufficient to access the next entry of the program. In a computer with byte level addressing and a word length of k bytes, the size of the increment is k. In the normal mode of sequential execution of a program, this first source is selected. The second source is the branch target. When a decoded branch instruction is executed, the multiplexer inserts into the program counter the address of the branch target address. The third source of addresses is the set of memory locations in which the interrupt handler routine are located. The fourth source of addresses is the program counter queue. At the end of an interrupt routine are instructions that select the program counter queue for enough cycles to reload the addresses that were inhibited by the interrupt.

### Description of the Figures

Figure 1 shows a sequence of program steps for use in illustrating the effect of a branch instruction.

Figure 2 shows the effect of a branch instruction in a pipelined computer.

Figure 3 illustrates a delayed branch in a program.

Figure 4 illustrates the effect of a delayed branch in a pipelined computer.

Figure 5 illustrates the effect in a pipelined computer of an interrupt occurring soon after a delayed branch.

Figure 6 illustrates a preferred embodiment of the disclosed invention.

Description of the Preferred Embodiment

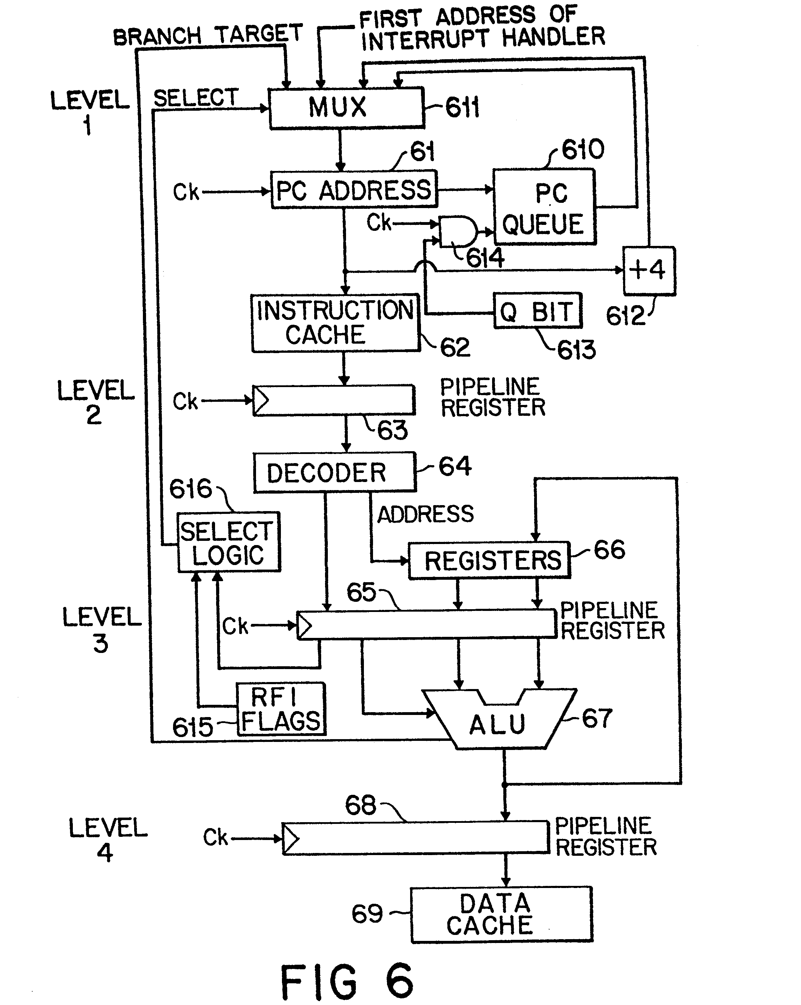

In Figure 6 is illustrated the manner in which a program counter queue can be utilized to save instruction addresses when an interrupt or trap occur. In this particular embodiment, a four level pipeline is utilized. At level 1 is a program counter 61 in which addresses of instructions to be executed are sequentially loaded. The instructions are stored in a memory such as instruction cache 62. The address in the program counter determines which of the instructions is next to be loaded into a pipeline register 63 located at level 2 of the pipeline. A decoder 64 translates the instruction in register 63 into a decoded instruction stored in a pipeline register 65 at level 3 in the pipeline. A set of general purpose registers 66 provides input to an arithmetic and logic unit 67 that provides data to a pipeline register 68 at level 4 of the pipeline. The data from register 68 is transferred into memory elements such as data cache 69. In each instruction cycle, instructions are advanced one level through the pipeline. In an alternative embodiment, the instruction fetch and decode are performed in a single instruction cycle so that pipeline register 63 is eliminated.

A program counter queue 610 is connected to program counter 61 to receive addresses from the program counter. When a new address is inserted into the program counter, the prior address in program counter 61 is loaded into program counter queue 610. In general, the program counter queue will hold the most recent N-1 entries loaded into it where N is the depth of the pipeline. For this particular embodiment, the queue will hold three addresses.

A four-to-one multiplexer 611 is connected to the input to the program counter to select the source of the address loaded into the program counter. Which of the four inputs is selected is determined by the signal at a select input of the multiplexer. This input is connected to select logic 616 which itself is responsive to input from the decoded instruction in pipeline register 65 and to a set of flags 615 discussed below. In each instruction cycle, an incrementer 612 increments the previous address in the program counter and applies the incremented address to a first input of the multiplexer. In normal operation, the instructions loaded into the program counter appear sequentially in the program being executed so that a subsequent address is some fixed increment of the previous address. In general, incrementer 612 increments the address in the program counter by an amount sufficient to access the next instruction that is to be executed during sequential execution of the program. In this particular embodiment, thirty two bit (4 byte) addresses are used and the addresses are byte addressable so that the incrementer increments the previous entry in the program counter by four.

Non-sequential execution of instructions occurs at branches, interrupts and traps. The branch instruction designates the branch target address (i.e., the address to

8

which the program is to branch). When a branch instruction is executed, the branch target address is supplied ALU 67 to a second input of the multiplexer and a signal is supplied from select logic 616 to the multiplexer select input to select the second input.

When an interrupt or a trap occurs, the interrupt or trap is implemented by an interrupt handler routine or a trap handler routine stored in memory. There will generally be a variety of different traps, each having an associated trap handler routine that starts at a different associated starting address. Since the traps and interrupts can be handled similarly, the following discussion and claims will be in terms of an interrupt. Thus, the term interrupt when used herein will include traps as well as external interrupts. When the interrupt occurs, the address of the first instruction of the interrupt handler routine is supplied to a third input of multiplexer 611 and the signal on the select input of the multiplexer selects this third input. Subsequent instruction addresses in the interrupt handler routine are produced by incrementer 612 and the select signal is set to select the first input.

When an interrupt occurs, a set of NOOP flags (not shown) equal in number to one less than the depth of the pipeline are set true. These NOOP flags are used to prevent the unexecuted instructions in the pipeline from interfering with the interrupt handler routine that is activated. At each successive instruction cycle, one of the NOOP flags is

9

0208181

set false. As long as one of the NOOP flags is true, essentially all effects of instruction execution are blocked other than stepping instructions through the pipeline. The particular circuitry responsive to these flags needed to effectuate this result will depend on the particular architecture utilized, but such circuitry is well known. This circuitry and the NOOP flags effectively enable the partially executed instructions to be flushed from the pipeline without interfering with the interrupt and then to make the circuitry responsive to the instructions in the interrupt handler routine.

When an interrupt or trap occurs, a Q bit 613 in a status register is set false. The Q bit and a clock are connected to the inputs of an AND gate 614 having an output to program counter queue 610 so that the Q bit serves as a clock enable. By setting the Q bit false, the contents of the program counter queue are frozen until the Q bit is reset true. Thus, the program counter queue functions to hold the three sequential addresses that were in the program counter during the three instruction cycles previous to the occurrence of the interrupt. At the end of the interrupt handler routine, a set of three RFI (return from interrupt) flags 615 are set true and the Q bit is set true. In each succeeding instruction cycle, one of these flags is set false until all of them are false. As long as at least one of these flags is true, the signal on the select input of multiplexer 611 selects a fourth multiplexer input that is

10

connected to the output of the program counter queue. Because the Q bit is again true, in each instruction cycle, the address in the program counter is loaded into the program counter queue, thereby transferring the least recently entered address in the program counter queue to the fourth input to multiplexer 611. This procedure enables the addresses of the instructions that were only partially executed at the time of the interrupt to be reinserted into the first level of the pipeline to enable execution of the interrupted program to be resumed.

C L A I M S

1. A pipelined processor comprising:

a plurality of pipeline registers (63, 65, 68) including a program counter (61);

means (6, 16, 611) for sequentially entering a plurality of addresses into the program counter, each address being associated with an instruction that is to be executed;

means (67) for executing an instruction at an address in the program counter;

a program counter queue (610), connected to the program counter (61);

means for loading the address in the program counter (61) into the program counter queue (610) when a subsequent address is loaded into the program counter;

means (613, 614), responsive to an interrupt, for disabling the queue (610) to prevent the contents of the queue from changing when the contents of the program counter change;

means for initiating execution of an interrupt handler routine; and

means, responsive to said interrupt handler routine, for sequentially entering the contents of the queue (610) into the program counter (61).

PROGRAM          PROGRAM

A                A

B                D

C                B

D                C

E                E

⋮                F

P                ⋮

Q                P

R                Q

⋮                R

                 ⋮

# FIG 1          # FIG 3
(PRIOR ART)      (PRIOR ART)

H 20 EP

| INSTRUCTION CYCLE | 1 | 2 | 3 | 4 | 5 | 6 | 7 |
|---|---|---|---|---|---|---|---|
| PC ADDRESS | D | E | F | P | Q | R | S |
| INSTRUCTION | C | D | E | F | P | Q | R |
| DECODED INSTRUCTION | B | C | D | E | F | P | Q |
| DATA | A | B | C | D | E | F | P |

# FIG 2 (PRIOR ART)

| INSTRUCTION CYCLE | 1 | 2 | 3 | 4 | 5 |
|---|---|---|---|---|---|
| PC ADDRESS | C | P | Q | R | S |
| INSTRUCTION | B | C | P | Q | R |
| DECODED INSTRUCTION | D | B | C | P | Q |
| DATA | A | A | B | C | P |

# FIG 4 (PRIOR ART)

| INSTRUCTION CYCLE | 1 | 2 | 3 | 4 | ⋯ | S+2 | S+3 |
|---|---|---|---|---|---|---|---|
| PC ADDRESS | C | P | Int 1 | Int 2 | | Int S | B |
| INSTRUCTION | B | C | P | Int 1 | | Int (S-1) | Int S |
| DECODED INSTRUCTION | D | B | C | P | | Int (S-2) | Int (S-1) |
| DATA | A | A | B | C | | Int (S-3) | Int (S-2) |

# FIG 5 (PRIOR ART)

0208181

H 20 EP

FIG 6

H 20 EP

European Patent Office

**EUROPEAN SEARCH REPORT**

EP 86 10 8412

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| A | EP-A-0 134 831 (IBM)<br>* Page 1, lines 7-25; page 2, line 14 - page 3, line 18; claim 1; page 8, line 28 - page 9, line 2 * | 1 | G 06 F 9/38<br>G 06 F 9/46 |
| | --- | | |
| A | EP-A-0 068 163 (IBM)<br>* Page 5, line 9 - page 6, line 7 * | 1 | |
| | --- | | |
| A | EP-A-0 020 931 (IBM)<br>* Page 3, line 8 - page 5, line 13 * | 1 | |
| | --- | | |
| A | US-A-3 162 841 (HOLLERAN)<br>* Column 1, line 25 - column 2, line 23; column 4, line 67 - column 5, line 8 * | 1 | |
| | ----- | | TECHNICAL FIELDS SEARCHED (Int. Cl.4)<br><br>G 06 F 9/38<br>G 06 F 9/46 |

The present search report has been drawn up for all claims

| Place of search | Date of completion of the search | Examiner |
|---|---|---|
| THE HAGUE | 24-09-1986 | QUESSON C.J. |